# EUROPEAN PATENT SPECIFICATION

(11) **EP 1 942 036 B1**
(45) Date of publication and mention of the grant of the patent: **02.03.2011**
(21) Application number: 07000091.4
(22) Date of filing: 04.01.2007
(51) Int. Cl.: B60R 22/02, B60R 22/26

(54) **Length compensating seat belt restraint system**
Längenausgleichendes Sicherheitsgurt-Rückhaltesystem
Système de retenue pour ceinture de sécurité pour compenser la longueur de celle-ci

(43) Date of publication of application: 09.07.2008
(73) Proprietor: GM Global Technology Operations, Inc., Detroit, MI 48265-3000 (US)
(72) Inventor: Lindberg, Jörgen, 46131 Trollhättan (SE); Ekström, Lars, 41103 Göteborg (SE); Heltorp, Dennis, 46142 Trollhättan (SE); Holmquist, Magnus, 46159 Trollhättan (SE); Sjöström, Martin, 46142 Trollhättan (SE); Karlsson, Torgny, 46142 Trollhättan (SE); Abrahamsson, Anders, 44135 Alingsas (SE)
(74) Representative: Strauss, Peter

(56) References cited:
- DE-A1- 2 617 801
- US-A- 6 076 894
- US-B1- 6 682 009

## Description

### Field of the Invention

The invention relates to the field of seat belt restraint systems and in particular to four-point seat belt restraint systems for restraining a vehicle occupant in a vehicle seat.

### Background and Prior Art

Studies have shown that 48% of belted fatalities in car chrashes appear in small overlap chrashes, which means that less than 30 % of the cars load path is used . What happens in these kind of accidents is an oblique torso movement and rotation towards the vehicle's outboard side, which causes a high proportion of serious chest and head injuries, e.g. the vehicle occupant misses the airbag and hits the A-pillar. Those kind of injuiries can be decreased with a symmetrical belt restraint system, restraining the passenger from a fatal rotation.

Another type of injury which occurs in such small overlap accidents is that the B-pillar, where in three-point restraint systems the belt is typically mounted, is forced backwards leading to hig belt loads, therefore contributing to increase passenger injury.

Four-point seat belt systems bear the potential of reliably preventing such fatal passenger movements. Due to an anchorage to the passenger seat, these kinds of seat belt systems is indeed favorable compared to ordinary three-point restraining systems nowadays widely used in cars.

Four-point seat belt restraint systems are well established and known in the prior art. They typically consist of two pairs of shoulder and lap belts. The two lap belts are interconnectable by means of a buckle assembly across the lap of the vehicle occupant. One end of the shoulder belts is connected to the respective lap belt, typically near those parts that are constituents of the buckle assembly. Therefore, all four belt members can be interconnected and fastened by means of a single buckle.

The end of the belt members that are oppositely located to the buckle assembly are connected to some kind of retracting mechanism keeping the belts rigidly attached to the occupant's body. Especially in impact or crash situations this is important for providing a maximum of passenger safety.

In order to provide an effective retracting system, most of the prior known four-point seat restraint systems require four different retractors, one for each lap- or shoulder belt. In order to prevent the so-called "submarining" especially the lap belts have to be kept down against the iliac crest of the passenger. Such retracting systems requiring four different retractors, one for each belt, are quite cost intensive and require some of the limited vehicle's constructed space. Furthermore, the retractors are often heavy in weight and therefore considerably contribute to the vehicle's total weight.

US 6,305, 713 B1 discloses a four-point seat belt system, wherein a pair of flexible lap belts is connected at laterally opposite sides of a passenger seat. Their inner ends are transversely connectable to one another across the pelvic region of the occupant. Further, the two lap belt members are connected with at least one pretensioner, which can for instance be centrally mounted underneath the passenger seat.

Also there exist some systems with common retractors for the shoulder belts. US patent application US 4, 175, 787 discloses for example a vehicle safety belt with two shoulder belt parts that have a single upper anchoring point located behind the upper area of a back rest in an automatic winding mechanism.

US 6,076,894 discloses a seat belt system comprising first and second shoulder belt portions. Here, each one of the shoulder belts has an end connected with a separate shoulder belt retractor.

DE 26 17 801 A describes a seat belt system comprising two shoulder belts that are connected with a belt strap interacting with a coil up mechanism. The belt strap entirely extends above and behind the passenger seat. Such a system is therefore only applicable for back seats of passenger vehicles. Additionally, the lap belt portion is assymetrically divided, wherein a larger portion extends across a passengers lap and wherein a buckle assembly is disposed on the side of a passengers lap

Even though the main function of two separate winding or retracting mechanisms can be effectively replaced by such a common shoulder belt retractor it does only insufficiently support sidewards movements or rotation of the occupant's torso. Especially in situations, where the occupant reaches out to pick something up which is located next to the seat or in case of other assymetric movements or torso rotations, one shoulder belt has to extend more than the other one. In this situations both shoulder belts will extend simultaneously from the retracting mechanism and while one belt remains tightened to the occupant's torso the other one will no longer be strained and may hang outside the seat with the risk of getting tangled up or with the risk that the occupant gets partly released or unfastened from the restraint system.

### Problem

For the sake of a maximum of passenger safety, such or similar kind of loose-fitting of shoulder belts especially with four-point set belt systems, has to be prevented.

### Aim of the invention

The invention therefore aims to provide an improved seat belt restraint system having a limited number of retractors and providing a firm fitting of belt members even in rotateted or bended positions of the occupant's torso. Further, the invention aims to decrease production and manufacturing costs for seat belt restraint systems.

### Summary of the Invention

The present invention provides a seat bealt restraint system comprising at least a first and a second shoulder belt that are directly or obliquely attached to a common shoulder belt retracting mechanism. The shoulder belt retracting mechanism or shoulder belt retractor is coupled to both of the shoulder belts and provides an asymmetric shoulder belt elongation. This means that the common shoulder belt retracting mechanism allows for a different elongation of the first and the second shoulder belt. Hence, the pullout of the first and second shoulder belt from the common retracting mechanism or retracting unit can differ in order to accomodate a rotative movement of the occupant's torso. At the same time, the two belts remain in firm contact with the occupant's torso. The occupant therefore remains securely fastened within the passenger seat even in case of assymetric torso movement.

This length compensating mechanism ensures, that both of the shoulder belts remain tightly or firmly fixed to the occupant's torso, in particular when it is not leaned againts the backrest of the passenger seat.

The common retracting mechanism further comprises a single spool element being adapted to retract the first as well as the second shoulder belt. Hence, according to the invention, the entire shoulder belt retracting mechanism is only equipped with only one spool element that is able to wind up both, first and second shoulder belts. The implementation of such a single spool element contributes to a decrease in manufacturing and production costs. Further, by making use of only one spool element for both shoulder belts instead of implementing a separate spool element for each shoulder belt, the constructed space requirements as well as the vehicle's total weight can be effectively reduced.

The retracting mechanism according to the present invention therefore provides a permanent fitting of both shoulder belts to the passenger torso and a substantially constant tension or traction on both shoulder belts irrespective of the occupant's torso movement or position, by making use of a single retractor or retracting mechanism that is coupled to both shoulder belts.

The extension compensation or assymetric shoulder belt elongation can be provided by means of a mechanical coupling of the shoulder belts to each other and the coupling of the two belts to a common retractor. In particular, the retracting mechanism with its winding spool is adapted to vary the total elongation of both shoulder belts, whereas a compensation supporting coupling between the first and the second shoulder belt provides an effective elongation compensation between the two shoulder belts.

In other words, the retracting system is furthermore adapted to affect the overall tension and traction that is applicable to both shoulder belts, allowing for a compensation movement or compensating elongation for the first shoulder belt with respect to the second shoulder belt and vice versa.

In particular, the two shoulder belts are designed as parts or portions of a single continous shoulder belt. Hence, the first and the second shoulder belt are integral portions or parts of the same continuous shoulder belt which extends to the occupant side of the passenger seat as the first and as the second shoulder belt through a first and a second belt guide, respectively. These belt guides are typically integrated into the passenger seat. The first and the second shoulder belts therefore belong to one and the same continuous belt.

Moreover, the invention provides a four-point seat belt restraint system. Here, the free end portions of the first and second shoulder belts, i.e. those portions that lie opposite to the intermediate loop portion are connected to a first and a second lap belt, respectively. Hence, the first shoulder belt is mechanically coupled to the first lap belt and the corresponding end portion of the second shoulder belt is connected to the second lap belt. The two lap belt members are preferably interconnectable across the lap of a vehicle occupant by means of a buckle assembly. The lap belts and the shoulder belts are preferably connected in the vicinity of the buckle assembly constituents of the first and the second lap belts.

Consequently, the two shoulder belts are components of a four-point seat belt restraint system, which - due to the common shoulder belt retracting mechanism - can be implemented with a limited amount of retractors. At the same time such a four-point seat belt restraint system provides the same comfort and the same passenger security compared to a four-point system featuring one retractor for each shoulder and/or each lap belt.

According to a preferred embodiment of the invention, an elongation compensation of the first shoulder belt comes along with a decrease in elongation of the second shoulder belt and vice versa. Hence, for each total elongation of both shoulder belts, the first shoulder belt can be extended or elongated at the expense of the second shoulder belt and vice versa. This kind of compensation mechanism accounts in particular for rotative movements of the occupant's torso. It provides asymmetric elongation of the two shoulder belts, whereby the tension and/or traction on both belts remains almost unchanged. Also, the elongation compensation between the first and second shoulder belt can be provided irrespective and independent from the overall retraction and tension, which is applied by means of the common retractor.

The visible portions of the continuous belt extending through the belt guides are denoted as first and second shoulder belt. The non-visible portion of the continuous belt, denoted as loop portion, preferably extends between the two belt guides inside the backrest of the passenger seat. The loop portion being typically not visible to the occupant is the intermediate piece notionally connecting the two - first and second - shoulder belts. Hence, the first and second shoulder belt and the intermediate loop portion form integrally the continuous shoulder belt.

Whereas the two outer sections of the continuous shoulder belt, the first and the second shoulder belts are adapted to engage with the occupant's body, the intermediate loop portion of the shoulder belt is engaged with the common spool element or with the common retracting mechanism, respectively. Retraction of the first and second shoulder belts can be achievd through a traction applied to the loop portion by means of the retracting mechanism. The implemented elongation compensation mechanism then equally distributes the traction force to the two shoulder belts. As a consequence, the tension applied to each shoulder belt is almost equal irrespective of the pullout from the spool element and irrespective of the actual torso position and torso orientation with respect to the belt guides. In this way the invention provides a maximum on passenger safety as well as passenger comfort.

The continuous belt, the two belt guides as well as the mechanical coupling of the continuous belt's loop portion to the retracting mechanism provide an easy, simple, effective and low-cost realisation of a shoulder belt retracting mechanism which at the same time requires only one spool element and which features a load dependent elongation compensation between the two end portions of the shoulder belts. These shoulder belts can for instance be connected to respective lap belt members thus forming a four-point seat belt restraint system.

According to a further aspect of the invention, the loop portion of the continuous shoulder belt extends through a ring, in particular a D-ring, which is engaged with the retracting mechanism or with its spool element by means of a retraction member. The retraction member in turn can be of various shape and geometry. It may be constructed or designed in a belt-like way. Other possible implementations include a rope-like or wire-like shape or geometry. At least the retraction member has to fulfil the task of transferring the traction provided by the retracting mechanism to the loop portion of the continuous belt.

According to a further embodiment, the two lap belts are adapted to be retracted by means of a lap belt retracting mechanism that comprises a common spool member for winding up of the first and the second lap belt. This spool member is therefore coupled to both lap belts and is preferably mounted under the passenger seat.

Further in another embodiment, it is intended, that the two lap belts extend in opposite directions from the common spool member, preferably in a 180-degree configuration. Hence, in a typical configuration, as seen from the vehicle long axis one of the lap belts extends to the right hand side whereas the other lap belt extends to the left hand side. The two lap belt members are wound up inside the common spool member. Hence in one direction of rotation of the spool member both lap belts are tightened, whereas the rotation in the opposite direction allows for a release movement of the two lap belts.

According to another embodiment, the arrangement of the lap belt spool member is rather symmetric and inherently provides a symmetric retraction force applicable to the two lap belt members. Therefore, the common spool member is adapted to apply substantially equal traction to the first and to the second lap belts.

Further according to another aspect, the common lap belt spool member is provided with a locking mechanism and a pretensioning member. By implementing a single spool member for both lap belts, production and manufacturing costs can be decreased. Additionally, the required constructed space for the retracting mechanism can be advantageously reduced to a minimum.

### Detailed Description

In the following various embodiments of the present invention will be described in detail by making reference to the drawings in which:
- Fig. 1: gives a schematic three-dimensional illustration of the four-point seat belt restraint system
- Fig. 2: depicts an alternative embodiment of the seat-belt restraint system and
- Fig. 3: shows an enlarged view of the lap belt retractor according to the embodiment of fig. 1.

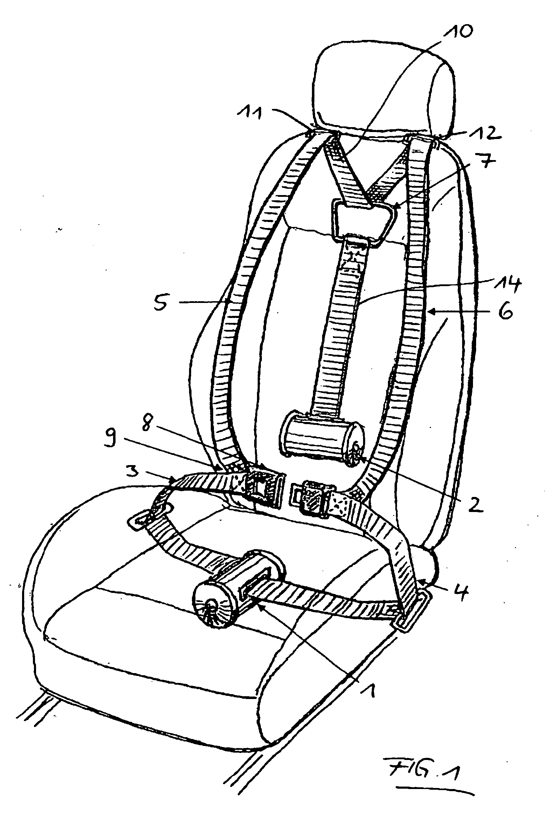

The four-point seat belt restraint system depicted in fig. 1 comprises a first lap belt 3 and a second lap belt 4 as well as a first shoulder belt 5 and a second shoulder belt 6. Both pairs of belts 3, 4, 5, 6 are pair wise coupled to retracting mechanisms driven by retractors 1, 2. Whereas the retractor 2 is coupled to the two shoulder belts 5, 6, retractor 1 is coupled to the two lap belts 3 and 4.

The retracting spool 1 is symmetrically arranged underneath the passenger seat in order to provide a symmetric retraction to both lap belt members 3 and 4. By implementing the lap belt retracting mechanism by means of a single spool member 1 also constructed space can be saved in a simple, efficient and cost effective way.

The two shoulder belts 5 and 6 are constituents of a continuous shoulder belt comprising three conjoined portions, namely the two shoulder belts 5 and 6 and the connecting loop portion 10. The two outer portions of the continuous shoulder belt extend to the occupant side of the passenger seat through the two belt guides 11 and 12. In contrast, the loop portion 10 of the continuous shoulder belt extends between the belt guides 11 and 12 and remains non-visible for the vehicle passengers.

The loop portion 10 is coupled to the retracting mechanism by means of a D-ring 7 fastened to a retraction member 14, which is designed in a belt-like way. This retraction belt 14 is coupled to the spool 2. Due to the D-ring coupling between the shoulder retraction spool 2 and the loop portion of the shoulder belt an elongation compensation between the two shoulder belts 5 and 6 can be provided. As soon as a passenger leans forward in an asymmetric way, for instance to the left, the first shoulder belt 5 will be elongated while an elongation of the second shoulder belt 6 will be reduced. In any case, the two belts 5 and 6 will remain rigidly and comfortably attached to the occupant.

Additionally, such a movement can be accompanied by an unwinding of the shoulder belt spool 2, thus giving more room and space. Such an unwinding will occur as soon as the overall passenger triggered tension on the two shoulder belts 5, 6 increases above a predetermined level. Hence, only when both shoulder belts 5, 6 are subject to comparable and symmetric load, they become elongated by the same amount. In this case the elongation of each shoulder belt corresponds to the elongation of the retraction member 14. As soon as the load applied to the two shoulder belts 5, 6 is rather unequal the shoulder belt's elongation becomes asymmetric and follows the applied load.

The shoulder belts 5 and 6 are connected to the corresponding lap belts 3 and 4 in the vicinity of the buckle assembly 8. Hence, the free ends of the shoulder and lap belts 3, 4, 5, 6 that are arranged opposite to their respective retractors 1, 2 are connected pair wise.

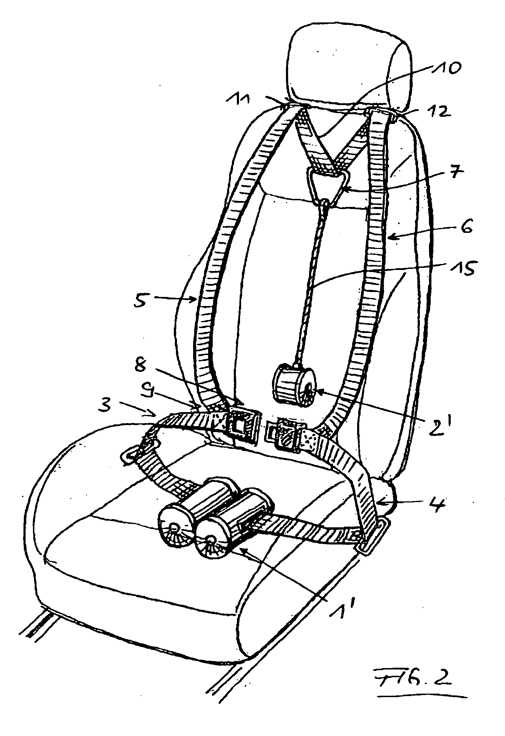

Figure 2 depicts an alternative embodiment of the four-point seat belt restraint system of figure 1. Here, the lap belt retractor 1' comprises two separate spools, each of which being coupled to one of the lap belts 3,4.

Further, the retraction member 15 coupling the continuous shoulder belt and the shoulder retracting mechanism 2' is designed in a rope- or wire-like way, allowing for a further reduction of required constructed space and weight.

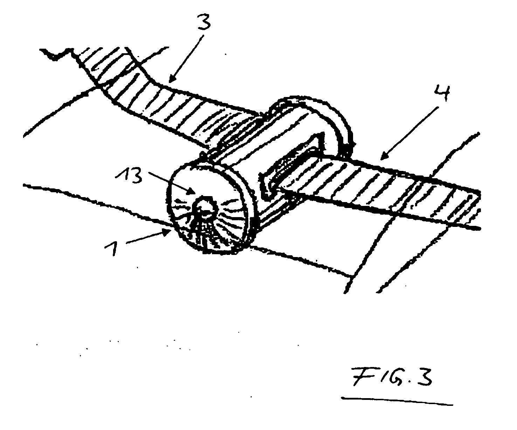

Figure 3 finally illustrates an enlarged view of the lap belt retracting mechanism shown in figure 1 comprising a double or twin spool 13. The two lap belts 3 and 4 expand in opposite directions from the spool 13. It's symmetric arrangement underneath the passenger seat inherently provides a symmetric retraction of the two lab belts 3 and 4. The two lap belts 3 and 4 are wound upon another inside the twin spool and leave the retractor in a 180-degree configuration. The retractor 1' is further optionally provided with a pretensioner and a locking mechanism.

### List of Reference Numerals

- lap belt spool member: 1
- double lap belt spool member: 1'
- shoulder belt spool element: 2
- shoulder belt spool element: 2'
- lap belt: 3
- lap belt: 4
- shoulder belt: 5
- shoulder belt: 6
- D-ring: 7
- buckle assembly: 8
- lap-shoulder-belt intersection: 9
- loop portion: 10
- belt guide: 11
- belt guide: 12
- spool member: 13
- retraction member: 14
- retraction member: 15

## Claims

1. A seat belt restraint system comprising a first (5) and a second (6) shoulder belt being attached to a common shoulder belt retracting mechanism, wherein the shoulder belt retracting mechanism allowing for asymmetric shoulder belt elongation, wherein the retracting mechanism has a single spool element (2) being adapted to retract the first (5) and the second (6) shoulder belt, wherein the first (5) and the second (6) shoulder belts being integral parts of a single continuous shoulder belt, **characterized in that** the shoulder belt extends to the occupant side of the passenger seat as the first (5) and second (6) shoulder belts through first and second belt guides (11, 12) and extends between the two belt guides as a loop portion (10) being operably engaged with the common spool element (2) and wherein a free end portion of the first shoulder belt (5) is connected to a first lap belt (3) and a free end portion of the second shoulder belt (6) is connected to a second lap belt (4), wherein the first (3) and second (4) lap belts being interconnectable across a lap of a vehicle occupant by means of a buckle assembly (8), the pairs of first and second lap- and shoulder belts (3, 4, 5, 6) forming a four-point seat belt restraint system.

2. The seat belt restraint system according to claim 1, **characterized by** an elongation of the first shoulder belt (5) leading to a decrease in length of the second shoulder belt (6) and vice versa.

3. The seat belt restraint system according to claim 1, **characterised by** the loop portion (10) of the continuous shoulder belt extending through a D-ring being engaged to the common spool element (2) by means of a retraction member (14, 15) of belt-like, rope-like or wire-like geometry.

4. The seat belt restraint system according to claim 3, **characterised by** a lap belt retracting mechanism (1; 1') comprising a common spool member (13) for winding up of the first (3) and the second (4) lap belt.

5. The seat belt restraint system according to claim 4, **characterised by** the lap belts (3, 4) extending in opposite directions from the common spool member (13).

6. The seat belt restraint system according to claim 5, **characterised by** the common spool member (13) being adapted to apply substantially equal traction to the first (3) and second (4) lap belts.

## Patentansprüche

1. Sicherheitsgurt-Rückhaltesystem, das einen ersten (5) und einen zweiten (6) Schultergurt umfasst, die an einem gemeinsamen Schultergurt-Aufrollmechanismus befestigt sind, wobei der Schultergurt-Aufrollmechanismus eine asymmetrische Schultergurtverlängerung erlaubt, wobei der Aufrollmechanismus ein einzelnes Spulenelement (2) besitzt, das dazu ausgeführt ist, den ersten (5) und den zweiten (6) Schultergurt aufzurollen, wobei der erste (5) und der zweite (6) Schultergurt integrierende Teile eines einzelnen kontinuierlichen Schultergurts sind, **dadurch gekennzeichnet, dass** sich der Schultergurt auf der Insassenseite des Beifahrersitzes als erster (5) und zweiter (6) Schultergurt durch erste und zweite Gurtführungen (11, 12) erstreckt und sich zwischen den zwei Gurtführungen als Schleifenabschnitt (10) erstreckt, der operativ mit dem gemeinsamen Spulenelement (2) verbunden ist, und wobei ein freier Endabschnitt des ersten Schultergurts (5) mit einem ersten Beckengurt (3) und ein freier Endabschnitt des zweiten Schultergurts (6) mit einem zweiten Beckengurt (4) verbunden ist, wobei der erste (3) und der zweite (4) Beckengurt über einem Beckenbereich eines Fahrzeuginsassen mittels einer Schnallenanordnung (8) miteinander verbindbar sind, wobei die Paare der ersten und zweiten Becken- und Schultergurte (3, 4, 5, 6) ein Vierpunkt-Sicherheitsgurt-Rückhaltesystem bilden.

2. Sicherheitsgurt-Rückhaltesystem gemäß Anspruch 1, **gekennzeichnet durch** eine Verlängerung des ersten Schultergurts (5), die zu einer Verringerung der Länge des zweiten Schultergurts (6) führt, und umgekehrt.

3. Sicherheitsgurt-Rückhaltesystem gemäß Anspruch 1, **dadurch gekennzeichnet, dass** der Schleifenabschnitt (10) des kontinuierlichen Schultergurts durch einen D-Ring verläuft, der mittels eines Aufrollelements (14, 15) von gurtähnlicher, seilähnlicher oder drahtähnlicher Geometrie mit dem gemeinsamen Spulenelement (2) verbunden ist.

4. Sicherheitsgurt-Rückhaltesystem gemäß Anspruch 3, **gekennzeichnet durch** einen Beckengurt-Aufrollmechanismus (1; 1'), der ein gemeinsames Spulenelement (13) zum Aufwickeln des ersten (3) und des zweiten (4) Beckengurts umfasst.

5. Sicherheitsgurt-Rückhaltesystem gemäß Anspruch 4, **dadurch gekennzeichnet, dass** sich die Beckengurte (3, 4) vom gemeinsamen Spulenelement (13) in entgegengesetzte Richtungen erstrecken.

6. Sicherheitsgurt-Rückhaltesystem gemäß Anspruch 5, **dadurch gekennzeichnet, dass** das gemeinsame Spulenelement (13) geeignet ist, eine im wesentlichen gleiche Zugkraft auf den ersten (3) und den zweiten (4) Beckengurt auszuüben.

## Revendications

1. Système de rétention par ceinture de sécurité comprenant une première sangle d'épaule (5) et une deuxième (6) fixées à un mécanisme commun de rétraction des sangles d'épaule, dans lequel le mécanisme de rétraction des sangles d'épaule autorise un allongement asymétrique des sangles d'épaule, dans lequel le mécanisme de rétraction possède un élément enrouleur unique (2) adapté pour rétracter la première sangle d'épaule (5) et la deuxième (6), dans lequel la première sangle d'épaule (5) et la deuxième (6) font partie intégrante d'une seule sangle d'épaule continue, **caractérisé en ce que** la sangle d'épaule s'étend du côté de l'occupant du siège de passager sous la forme des première (5) et deuxième (6) sangles d'épaule à travers des premier et deuxième guides de sangle (11, 12) et s'étend entre les deux guides de sangle sous la forme d'une partie en boucle (10) pouvant être engagée de façon opérationnelle avec l'élément enrouleur commun (2) et dans lequel une partie d'extrémité libre de la première sangle d'épaule (5) est reliée à une première sangle de bassin (3) et une partie d'extrémité libre de la deuxième sangle d'épaule (6) est reliée à une deuxième sangle de bassin (4), les première (3) et deuxième sangles de bassin (4) pouvant être reliées entre elles en travers du bassin d'un occupant du véhicule au moyen d'un assemblage de boucle (8), les paires de première et deuxième sangles d'épaule et de bassin (3, 4, 5, 6) formant un système de rétention par ceinture de sécurité à quatre points.

2. Système de rétention par ceinture de sécurité selon la revendication 1, **caractérisé en ce qu'**un allongement de la première sangle d'épaule (5) entraîne une réduction de la longueur de la deuxième sangle d'épaule (6) et vice versa.

3. Système de rétention par ceinture de sécurité selon la revendication 1, **caractérisé en ce que** la partie en boucle (10) de la sangle d'épaule continue passe à travers un anneau en forme de D qui est en prise avec l'élément enrouleur commun (2) au moyen d'un élément de rétraction (14, 15) ayant une géométrie en forme de sangle, de corde ou de fil.

4. Système de rétention par ceinture de sécurité selon la revendication 3, **caractérisé en ce qu'**il comporte un mécanisme de rétraction des sangles de bassin (1 ; 1') comprenant un élément enrouleur commun (13) pour enrouler la première sangle de bassin (3) et la deuxième (4).

5. Système de rétention par ceinture de sécurité selon la revendication 4, **caractérisé en ce que** les sangles de bassin (3, 4) s'étendent dans des directions opposées à partir de l'élément enrouleur commun (13).

6. Système de rétention par ceinture de sécurité selon la revendication 5, **caractérisé en ce que** l'élément enrouleur commun (13) est adapté pour exercer une traction sensiblement égale sur la première sangle de bassin (3) et la deuxième (4).
